# EUROPÄISCHE PATENTANMELDUNG

(11) **EP 3 971 360 A2**
(43) Veröffentlichungstag der Anmeldung: **23.03.2022**
(21) Anmeldenummer: 21193756.0
(22) Anmeldetag: 30.08.2021
(51) Int. Cl.: E04C 2/288, E04C 2/04

(54) **WANDBAUELEMENT, INSBESONDERE FASSADENWAND-BAUELEMENT UND VERBINDUNGSTEIL**

(30) Priorität: 22.09.2020 CH 12022020
(71) Anmelder: KKI Enterprises GmbH, 6343 Rotkreuz (CH)
(72) Erfinder: Dr. Kahmer, Herbert, 63526 Erlensee (DE)
(74) Vertreter: Patentanwälte Bernhardt / Wolff Partnerschaft mbB

(57) **Zusammenfassung**

Die Erfindung betrifft ein Wandbauelement, insbesondere ein Fassadenwand-Bauelement, mit zueinander in Abstand angeordneten Wandschalen (1,2) und den Abstand zwischen den Wandschalen (1,2) überbrückenden Verbindungselementen, wobei die Verbindungselemente längliche und mit ihren Enden in das Material der Wandschalen eingebettete Verbindungsteile (3) umfassen.

Das erfindungsgemäße Wandbauelement ist dadurch gekennzeichnet, dass die Verbindungsteile (3) jeweils an wenigstes einem der beiden Enden eine Profilierung aufweisen, durch die in Längsrichtung des Verbindungsteils (3) einander im Abstand gegenüberliegende Flächen (7,8;7c,12c) gebildet sind, welche das einbettende Wandschalenmaterial in entgegengesetzten Längsrichtungen hintergreifen.

## Beschreibung

Die Erfindung betrifft ein Wandbauelement, insbesondere Fassadenwand-Bauelement, mit zueinander im Abstand angeordneten Wandschalen und den Abstand zwischen den Wandschalen überbrückenden Verbindungselementen, wobei die Verbindungselemente längliche, mit ihren Enden in das Material der Wandschalen eingebettete Verbindungsteile umfassen. Die Erfindung betrifft ferner ein z.B. in dem erfindungsgemäßen Wandbauelement einsetzbares Verbindungsteil, sowie ein Spritzgießwerkzeug zur Herstellung eines z.B. solchen Verbindungsteils.

Wandbauelemente der obengenannten Art sind beispielsweise aus DE 10 2005 041 082 A1 sowie DE 10 2011 014 063 A1 bekannt. Der Erfindung liegt die Aufgabe zugrunde, ein neues solches Wandbauelement zu schaffen, das dynamischen Belastungen, wie sie insbesondere bei Erdbeben auftreten, standhält.

Das diese Aufgabe lösende Wandbauelement nach der Erfindung ist dadurch gekennzeichnet, dass die Verbindungsteile jeweils an wenigstens einem der beiden Enden eine Profilierung aufweisen, durch die in Längsrichtung des Verbindungsteils einander im Abstand gegenüberliegende Flächen gebildet sind, welche das einbettende Wandschalenmaterial in entgegengesetzten Längsrichtungen hintergreifen.

Vorteilhaft ist gemäß der Erfindung das Ende des Verbindungsteils im einbettenden Material der Wandschale in Längsrichtung des Verbindungsteils festgelegt, indem bei Hin- und Herbewegungen des Verbindungsteils in dessen Längsrichtung abwechselnd den Flächen durch Formschluss eine Haltefunktion zukommt. Vorteilhaft reicht die Tiefe auf der Schalenaußen- oder -innenfläche gebildeter Risse jeweils maximal nur bis an die Flächen heran, so dass sich zwischen den Flächen ein rissfreier Bereich ergibt.

Vorzugsweise sind die einander gegenüberliegenden Flächen zueinander geneigt oder erstrecken sich senkrecht zur Längsachse des Verbindungseils.

Die einander gegenüberliegenden Flächen können mindestens eine über den Umfang des Verbindungsteils durchgehende Ringfläche, die durch einen Ringvorsprung des Verbindungsteils gebildet ist, aufweisen, oder mindestens eine unterbrochene Ringfläche umfassen, die durch über den Umfang des Verbindungsteils verteilte Vorsprünge gebildet ist.

Insbesondere weist die Profilierung neben einem einzigen durchgehenden Ringvorsprung ausschließlich über den Umfang des Verbindungsteils verteilte Vorsprünge auf, oder es sind zwei in axialem Abstand zueinander angeordnete, eine Ringnut bildende Ringvorsprünge vorhanden.

Als besonders wirksam, insbesondere in Bezug auf die Meidung von Rissbildung, hat sich die erfindungsgemäße Profilierung erwiesen, wenn die Ringflächen symmetrisch in Bezug auf die Mittelebene der betreffenden Wandschale angeordnet werden.

Es versteht sich, dass die Fixierungswirkung durch die das einbettende Wandschalenmaterial hintergreifenden Ringflächen abnimmt, wenn der Abstand, mit dem sich die Ringflächen einander gegenüberliegen, gering wird. In einer bevorzugten Ausführungsform der Erfindung ist der Abstand zwischen den Ringflächen um ein Mehrfaches größer als die Breite der Ringflächen, insbesondere um ein Sechs- bis Achtfaches. Vorzugsweise handelt es sich bei den Ringflächen um Seitenflächen einer Ringnut, wobei die Breite bzw. die axiale Länge der Ringnut in Anbetracht einer Anwendung der Spritzgießtechnik um ein Mehrfaches größer als die auf einen der beiden Nutenränder bezogene Nutentiefe sein kann, insbesondere um ein Zehn- bis Zwölffaches.

Vorzugsweise sind die Verbindungsteile im Wesentlichen bolzenförmig mit kreisförmigem Querschnitt ausgebildet.

In weiterer vorteilhafter Ausgestaltung der Erfindung sind die Ringflächen zur Längsrichtung des Verbindungsteils geneigt und fallen insbesondere zu dem Boden der Ringnut hin ab. Durch Meidung eines scharfkantigen Übergangs zwischen Bolzenoberfläche und Nutenboden wird einer Rissbildung entgegengewirkt.

Die Ringflächen können durch eine Ausnehmung oder/und jeweils einen Ringvorsprung von einer zylindrischen Mantelfläche des bolzenförmigen Verbindungsteils gebildet sein.

In der bevorzugten Ausführungsform der Erfindung betrifft die Profilierung sowohl Änderungen des Durchmessers des Verbindungsteils als auch Änderungen der Querschnittsform.

So kann der Boden der Ringnut über den Umfang (insbesondere gleichmäßig) verteilte Erhebungen aufweisen, die in Längsrichtung des Verbindungsteils zu einer erheblichen Verstärkung des Reibschlusses zwischen einbettendem Wandschalenmaterial, insbesondere Beton, und dem Verbindungsteil führt.

Bei den Erhebungen kann es sich um Noppen handeln, die im Abstand von den Ringflächen angeordnet sind.

In einer Ausführungsform handelt es sich bei den Erhebungen um in axialer Richtung ausgedehnte Stege, die vorzugsweise an die Ringflächen angrenzen und bis zur Längsmitte der Stege hin ansteigende Rampen bilden.

Vorteilhaft kommt es durch die Noppen und/oder Erhebungen in dem rissfreien Bereich zu einer zusätzlichen Verkeilung zwischen dem Verbindungsteil und dem Schalenmaterial.

Die Erfindung ist nachfolgend anhand von Ausführungsbeispielen und sich auf diese Ausführungsbeispiele beziehende Zeichnungen weiter erläutert. Es zeigen:
- Fig. 1: eine Teilansicht eines erfindungsgemäßen Wandbauelements entsprechend einem ersten Ausführungsbeispiel für die vorliegende Erfindung,
- Fig. 2: eine Teilansicht eines Verbindungsteils nach der Erfindung für ein erfindungsgemäßes Wandbauelement entsprechend einem zweiten Ausführungsbeispiel für die Erfindung,
- Fig. 3 und 4: eine Komponente einer Gießform zur Herstellung eines Schalen-verbindungsteils nach der Erfindung für ein erfindungsgemäßes Wand-bauelement,
- Fig. 5: ein weiteres Ausführungs- und Verwendungsbeispiele für Verbindungs-teile nach der Erfindung, und
- Fig. 6 und 7: ein Spritzgießwerkzeug zur Herstellung von Verbindungsteilen gemäß einem weiteren Ausführungsbeispiel für die Erfindung.

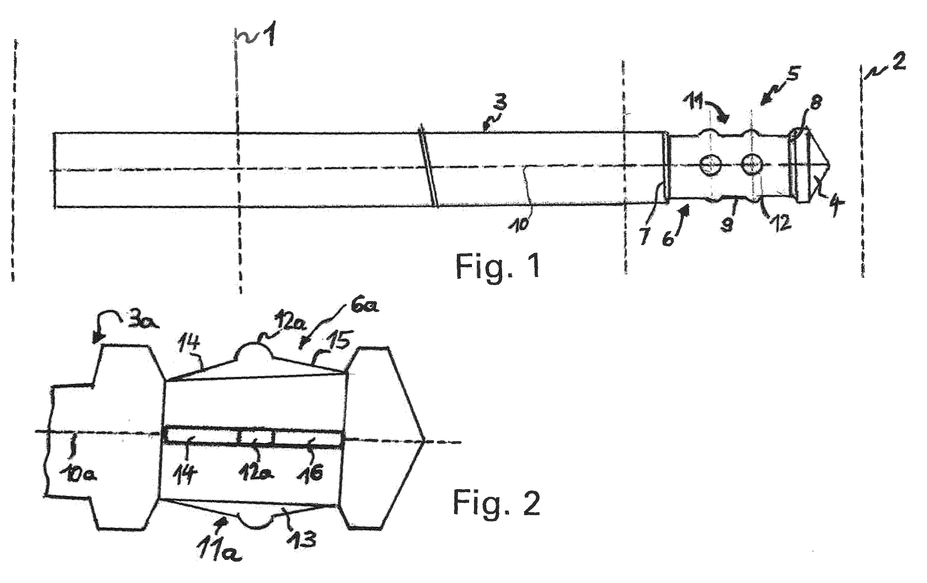

Ein Wandbauelement von Geschosshöhe und mit einer Breite von z.B. 5 Metern umfasst in Fig. 1 durch Strichlinien angedeutete Wandschalen 1 und 2 aus Beton. Die zueinander parallel und im Abstand angeordneten Wandschalen 1,2 sind durch eine Vielzahl bolzenförmiger Verbindungsteile 3, deren Enden in den Beton der Wandschalen 1,2 eingegossen sind, miteinander verbunden.

Neben den z.B. im Rasterabstand von 40 bis 70 cm angeordneten bolzenförmigen Verbindungsteilen 3 kann das Bauelement weitere Verbindungsteile in Form sich vertikal oder horizontal erstreckender Platten oder Anker aufweisen (nicht gezeigt). Abweichend von der zur Plattenebene senkrechten Anordnung der bolzenförmigen Verbindungsteile 3 können einzelne solcher Verbindungsteile (nicht gezeigt) schräg zur Plattenebene verlaufen, insbesondere derart geneigt, dass das Gewicht einer Wandschale als Vorsatzschale abgetragen wird.

Bei der Wandschale 2 handelt es sich insbesondere um eine mit einer Dämmung verbundene Vorsatzschale. Wie Fig. 1 erkennen lässt, ist das in den Beton der Vorsatzschale eingebettete Ende des Verbindungsteils 3 mit einer konischen Spitze 4 versehen. Neben der konischen Spitze 4 weist dieses Ende ferner einen profilierten Längsabschnitt 5 auf, der durch eine Vertiefung in der Zylinderwand des bolzenförmigen, zur Spitze 4 hin etwas aufgeweiteten Verbindungsteils 3 gebildet und bezogen auf die Dicke der Wandschale 2 symmetrisch angeordnet ist. Das heißt, Anfang und Ende des profilierten Abschnitts 5 sind von der nächstliegenden Wandoberfläche der Wandschale 2 jeweils etwa gleich weit entfernt.

Die Profilierung des Längsabschnitts 5 des Verbindungsteils 3 betrifft sowohl Änderungen des Bolzendurchmessers als auch Änderungen der Form des Bolzenquerschnitts.

In dem gezeigten Beispiel umfasst der profilierte Längsabschnitt 5 des Verbindungsteils 3 eine Ringnut 6 mit Seitenflächen 7 und 8, die zum Boden 9 der Ringnut hin abfallen und mit der Zylinderachse 10 des bolzenförmigen Verbindungsteils 3 einen Winkel von ca. 70° einschließen.

Von dem Nutenboden 9 erstrecken sich Erhebungen bzw. Vorsprünge 11 in Form von Paaren von Noppen 12, die in Bezug auf eine Mittelebene des Längsabschnitts 5 symmetrisch angeordnet und gleichmäßig über den Umfang des Nutenbodens 9 verteilt sind. Insgesamt sind vier Paare von Noppen 12 gebildet.
Dem profilierten Längsabschnitt 5 kommt vor allem bei dynamischen Belastungen des Wandbauelements, wie sie bei einem Erdbeben auftreten, besondere Bedeutung zu. Insbesondere wirkt diese Profilierung einer von dem eingebetteten Ende des Verbindungsteils 3 ausgehenden, die Stabilität der Wandschale beeinträchtigenden Rissbildung im Beton entgegen.

Bei dynamischer Belastung des Wandbauelements kommt es zur Hin- und Herbewegung der Wandschale 2 mit einer Komponente in Richtung der Zylinderachse 10 (die auch zur Schalenebene geneigt sein kann). Dabei hintergreifen die Seitenflächen 7 und 8 der Ringnut 6 jeweils abwechselnd das die Ringnut 6 ausfüllende Betonmaterial, sodass sich ein die Wandschale 2 axial auf dem bolzenförmigen Verbindungsteil 3 fixierender Formschluss ergibt. Die Neigung der Flächen 7,8 zur Zylinderachse 10 bzw. Nutenboden 9 ist mit ca. 70° andererseits so gewählt, dass bei Rissbildung die Fixierungswirkung durch die Noppen 12 der Erhebung 11 weiter verstärkt wird. Durch die Erhebung 11 bzw. Noppen 12 ergibt sich außerhalb des nur bis zur Ringfläche 8 gerissenen Schalenbereichs eine zusätzliche Verkeilung.

Eine stabile Verbindung zwischen der Wandschale 2 und dem Verbindungsteil 3 durch Formschluss wird vor allem dadurch erreicht, dass die Breite der Ringnut 6, d.h. deren axiale Länge, um ein Mehrfaches größer als die Tiefe der Ringnut 6 bzw. die Breite der Seitenflächen 7,8 ist. Die axiale Scherbelastung des Betons bei Hin- und Herbewegung der Wandschale 2 in axialer Richtung verteilt sich damit auf eine größere Länge.

Einer solchen Belastung entgegen wirkt ferner ein erhöhter Reibschluss zwischen dem Beton und dem Nutenboden 9, der durch die Paare von Noppen 12 erreicht wird. Die Noppen 12, die in dem gezeigten Beispiel bündig mit der Zylinderoberfläche des bolzenförmigen Verbindungsteils 3 abschließen, erhöhen vorteilhaft nicht nur den Reibschluss in axialer Richtung, sondern wirken auch einer Drehung des Verbindungsteils um die Zylinderachse 10 relativ zum Beton entgegen.

Ein in Figur 2 gezeigtes Ausführungsbeispiel für ein Verbindungsteil 3a unterscheidet sich von dem vorangehenden Ausführungsbeispiel dadurch, dass der Boden 9a einer Ringnut 6a nicht nur Noppen, sondern Erhebungen 11a mit Noppen 12a und jeweils einem dachartigen Steg 13 mit zu den Noppen 11a in entgegengesetzten Richtungen ansteigenden Rampen 14 und 15 aufweist. In dem gezeigten Ausführungsbeispiel sind vier gleichmäßig um die Zylinderachse 10a verteilt angeordnete solche Erhebungen 11a vorgesehen, die bis an die Seitenflächen 7,8 heranreichen. Ferner ist im Unterschied zu dem Ausführungsbeispiel von Fig. 1 die Ringnut 6a an beiden Nutenrändern durch einen sich über den Bolzendurchmesser erhebenden Ringvorsprung gebildet. Es versteht sich, dass der Bolzendurchmesser im Nutenbereich größer, kleiner oder gleich dem Durchmesser des an den inneren Ringvorsprung angrenzenden Bolzenabschnitts sein kann.

Die Erhebungen 11a mit den Noppen 12a und den Rampen 14,15 verbessern erheblich den Reibschluss in axialer Richtung, indem bei axialer Hin-und Herbewegung des Verbindungsteils 3 relativ zur Wandschale 2 der Beton jeweils rampenaufwärts zusammengepresst wird.

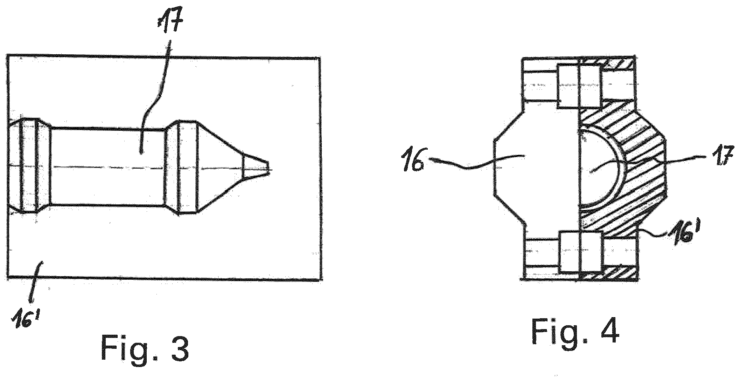

Fig. 3 und 4 zeigen in zwei zueinander senkrechten Ansichten eine Komponente für die Bildung einer Spritzgießform zur Herstellung von Verbindungsteilen, z.B. der vorangehend beschriebenen Verbindungsteile 3.

Bei der Komponente handelt es sich um einen Bestandteil eines Gießform-Baukastens, der ferner eine (nicht gezeigte) Grundplatte mit Ausnehmungen umfasst, in die unter Bildung eines Vielfachwerkzeugs Komponenten gemäß Fig. 3 und 4 einsetzbar sind.

Wie die Fig. 3 und 4 zeigen, sind die Komponenten bzw. Einsätze zweiteilig aus miteinander verschraubbaren Hälftenteilen 16,16' ausgebildet, die einen Formhohlraum 17 für die Bildung eines die Profilierung umfassenden Endteils eines Verbindungsteils 3 bilden.

Zur Entformung eines Verbindungsteils 3 werden die Einsätze den Plattenausnehmungen entnommen und unter Freilegung des Verbindungsteils 3 die Hälftenteile 16,16' voneinander gelöst.

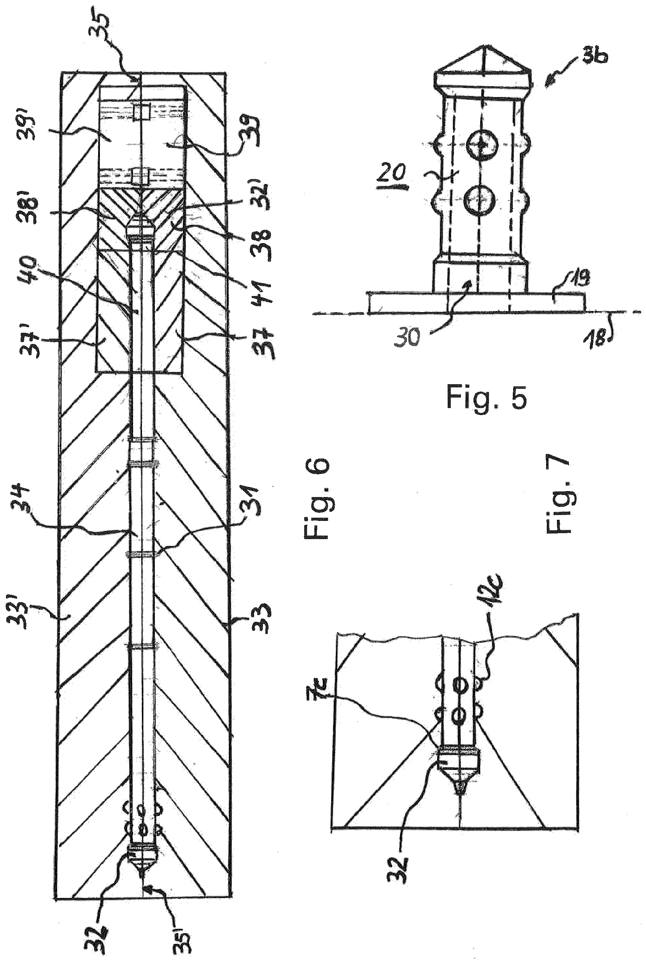

Ein weiteres Vielfach-Spritzgießwerkzeug zur Herstellung von Verbindungsteilen ist weiter unten anhand von Fig. 7 beschrieben.

Fig. 5 zeigt ein Verbindungsteil 3b, in Form eines in Betonmaterial einzubettenden Dübels. Der Dübel umfasst eine zu einer Wandoberfläche 18 bündige Grundplatte 19, von der sich ein länglicher Hohlkörper 20 mit einem Längskanal 30 für die Aufnahme einer Schraube erstreckt. Der Hohlkörper 20 kann z.B. Profilierungen aufweisen, wie sie vorangehend anhand der Verbindungsteile 3,3a beschrieben sind. Die Grundplatte 19 dient zur Fixierung des Dübels auf der Schalform beim Gießen des Schalenbetons; sie kann später nach der Wandmontage entfernt werden, falls eine Sollbruchstelle am Hohlkörper 20 versehen ist.

Ein in Fig. 6 und 7 in geschnittener Seitenansicht gezeigtes Spritzgießwerkzeug dient zur Herstellung von Verbindungsteilen, im gezeigten Beispiel von Verbindungsteilen gemäß einem weiteren Ausführungsbeispiel.

Das Spritzgießwerkzeug umfasst zwei in dem Beispiel als Hälften ausgebildete Hauptwerkzeugteile 33 und 33'. Die Hauptwerkzeugteile 33, 33' weisen Aussparungen für die Bildung von in dem Beispiel insgesamt vier, zueinander parallel und im Abstand angeordnete Formhohlräumen auf. Zur Bildung der Formhohlräume 34 sind die plattenförmigen Hauptwerkzeugteile 33,33' mit ihren ebenen Plattenflächen 35 und 35' aneinander anzulegen. In den Schnittdarstellungen von Fig. 6 und 7 ist von den z.B. vier Formhohlräumen nur einer der Formhohlräume 34 sichtbar.

Neben den Aussparungen für die Bildung der Formhohlräume 34 weisen die Hauptwerkzeuge 33,33' jeweils eine Aussparung für die Bildung eines Aufnahmeraums 36 für weitere Werkzeugteile 37-39 bzw. 37'-39' auf.

Die weiteren Werkzeugteile 37-39 bzw. 37'-39' sind wie die Hauptwerkzeugteile 33,33' als ggf. miteinander verschraubbare Hälften ausgebildet und weisen Aussparungen für die Bildung von Formhohlraumabschnitten 40 und 41 auf. Die Formhohlraumabschnitte 40,41 schließen sich an die betreffenden Formhohlraumabschnitte an, die durch die Hauptwerkzeugteile 33 und 33' gebildet sind, und komplettieren damit die zur Bildung der Verbindungsteile in ihrer Gesamtheit benötigten Formhohlräume 34.

Die weiteren Werkzeugteile bilden Einsatzstücke, die in den durch die Hauptwerkzeugteile 33,33' umschlossenen Aufnahmeraum 36 passend einfügbar sind. Zur Verfügung stehen Einsatzstücke, welche die Herstellung von Verbindungsteilen in unterschiedlichen Längen gestatten. Es versteht sich, dass bei der Herstellung längst möglicher Verbindungsteile den weiteren Werkzeugteilen 38,38' entsprechende Werkzeugteile am äußeren Ende des Aufnahmeraums 36 zur Anordnung kommen.

Wie Fig. 6 ferner zu entnehmen ist, weisen die Formhohlraumabschnitte, welche nur durch die Hauptwerkzeugteile 33,33' gebildet sind, ringförmige Einbuchtungen 31 auf, durch welche entsprechende Ringvorsprünge an den Verbindungsteilen entstehen. Zum einen geben diese Ringvorsprünge den durch Bohrungen in einer Dämmlage geführten Verbindungsteilen in der Bohrung halt, zum anderen verhindern diese Ringvorsprünge, dass noch flüssiger Ortbeton in den Zwischenraum zwischen der Bohrungswand und dem Verbindungsteil eindringen kann.

Die mit dem Spritzgießwerkzeug von Fig. 6 und 7 ggf. aus GFK-Material herstellbaren Verbindungsteile weisen an den Enden jeweils einen Ringvorsprung 32 bzw. 32' auf. Dem Ringvorsprung 32 mit einer zur Längsachse des Verbindungsteils geneigten Ringfläche 7c weist im Abstand zu der Ringfläche angeordnete Noppen 12c auf, wobei zwei ringförmige Noppenanordnungen mit jeweils vier Noppen in axialem Abstand zueinander angeordnet sind.

Auch die in Fig. 6 und 7 gezeigte, in den Beton zu verbindender Schalen einzubettende Profilierung hat bei wechselnder axialer Belastung der Verbindungsteile die oben beschriebene Wirkung. Es versteht sich, dass mit der vorangehend beschriebenen Spritzgießform bei geringfügiger Änderung auch Verbindungsteile mit den vorangehend beschriebenen Profilierungen hergestellt werden könnten.

Die weiteren Werkzeugteile können in dem Aufnahmeraum 36 durch Einpassung oder/und besondere Fixiermittel festlegbar sein. Insbesondere sind weitere Werkzeugteile derart verfügbar, dass Verbindungsteile in unterschiedlichen Längen herstellbar sind. Insbesondere können die weiteren Werkzeugteile in dem Aufnahmeraum 346dadurch fixiert werden, dass sie den Aufnahmeraum vollständig ausfüllen.

Es versteht sich, dass die n dem Beispiel durch die Hauptwerkzeugteile 33,33' gebildete, die Noppen 12c aufweisende Profilierung auch zusätzlich oder allein durch entsprechende weitere Werkzeugteile gebildet werden könnte.

## Patentansprüche

1. Wandbauelement, insbesondere Fassadenwand-Bauelement, mit zueinander in Abstand angeordneten Wandschalen (1,2) und den Abstand zwischen den Wandschalen (1,2) überbrückenden Verbindungselementen, wobei die Verbindungselemente längliche, mit ihren Enden in das Material der Wandschalen (1,2) eingebettete Verbindungsteile (3) umfassen,
**dadurch gekennzeichnet,**
**dass** die Verbindungsteile (1,2) jeweils an wenigstens einem der beiden Enden eine Profilierung aufweisen, durch die in Längsrichtung des Verbindungsteils (3) einander im Abstand gegenüberliegende Flächen (7,8; 7c,12c) gebildet sind, welche das einbettende Wandschalenmaterial in entgegengesetzten Längsrichtungen hintergreifen.

2. Wandbauelement nach Anspruch 1,
**dadurch gekennzeichnet,**
**dass** die einander gegenüberliegenden Flächen(7,8; 7c,12c) zueinander geneigt sind oder sich senkrecht zur Längsachse des Verbindungsteils erstrecken.

3. Wandbauelement nach Anspruch 1 oder 2,
**dadurch gekennzeichnet,**
**dass** die einander gegenüberliegenden Flächen mindestens eine über den Umfang des Verbindungsteils durchgehende Ringfläche (7,8), die durch einen Ringvorsprung des Verbindungsteils gebildet ist, oder mindestens eine unterbrochene Ringfläche umfassen, die durch über den Umfang des Verbindungsteils verteilte Vorsprünge (12c) gebildet ist.

4. Wandbauelement nach einem der Ansprüche 1 bis 3,
**dadurch gekennzeichnet,**
**dass** die Profilierung neben einem einzigen durchgehenden Ringvorsprung (32) ausschließlich über den Umfang des Verbindungsteils verteilte Vorsprünge (12c) aufweist oder zwei in axialem Abstand zueinander angeordnete, eine Ringnut (6) bildende Ringvorsprünge aufweist.

5. Wandbauelement nach Anspruch 4,
**dadurch gekennzeichnet,**
**dass** Erhebungen (11) von einer Bodenfläche (9) der Ringnut (6) vorstehen.

6. Wandbauelement nach einem der Ansprüche 3 bis 5,
**dadurch gekennzeichnet,**
**dass** die Ringflächen (7,8) symmetrisch in Bezug auf die Mittelebene der betreffenden Wandschale (2) angeordnet sind.

7. Wandbauelement nach einem der Ansprüche 3 bis 6,
**dadurch gekennzeichnet.**
**dass** der Abstand zwischen den Ringflächen (7,8) um ein mehrfaches, insbesondere ein sechs- bis achtfaches, größer als die jeweilige Breite der Ringfläche (7,8) ist.

8. Wandbauelement nach einem der Ansprüche 1 bis 7,
**dadurch gekennzeichnet,**
**dass** die Profiliierung sowohl Änderungen des Durchmessers als auch Änderungen der Querschnittsform des Verbindungsteils (3) betrifft.

9. Wandbauelement nach einem der Ansprüche 3 bis 8,
**dadurch gekennzeichnet,**
**dass** die Erhebungen (11) in axialem Abstand zu den Ringflächen (7,8) angeordnete Noppen (12) sind.

10. Wandbauelement nach einem der Ansprüche 3 bis 9,
**dadurch gekennzeichnet,**
**dass** die Erhebungen (11) sich in axialer Richtung erstreckende Stege (13) umfassen.

11. Wandbauelement nach Anspruch 10,
**dadurch gekennzeichnet,**
**dass** die Stege (13) unter Bildung von Rampen (14,15) zu ihrer Längsmitte hin ansteigen und insbesondere an die Ringflächen (7,8) angrenzen.

12. Verbindungsteil (3), insbesondere für ein Wandbauelement nach einem der Ansprüche 1 bis 11, mit einem länglichen, zur Einbettung in aushärtendes Material mit zumindest einem Ende bestimmten Verbindungskörper,
**dadurch gekennzeichnet,**
**dass** der Verbindungskörper an dem Ende eine Profilierung aufweist, durch die in Längsrichtung des Verbindungskörpers einander im Abstand gegenüberliegende Flächen (7,8; 7a,12c) gebildet sind, welche das einbettende Material in entgegengesetzten Längsrichtungen hintergreifen.

13. Verbindungsteil nach Anspruch 12,
**dadurch gekennzeichnet,**
**dass** das Verbindungsteil (3b) einen in aushärtendes Material, insbesondere Beton, einzugießenden Dübel bildet, wobei der Deckel insbesondere einen länglichen Verbindungskörper (20) mit einem Längskanal (30) und ggf. eine bündig in Beton versenkbare Stirnplatte (19) umfasst.

14. Spritzgießwerkzeug zur Herstellung von Verbindungsteilen, insbesondere länglichen Verbindungsteilen nach Anspruch 12 oder 13,
**gekennzeichnet durch** zwei, zur Bildung von mindestens einem Formhohlraum mit ebenen Flächen (24,24') aneinander anlegbare Werkzeugteile (22,22'), die Aussparungen zur Bildung eines Teils des Formhohlraums sowie zur Bildung eines Aufnahmeraums (25) für weitere, den Formhohlraum ergänzende Werkzeugteile (26-28; 26'-28') aufweisen.
